# EUROPEAN PATENT APPLICATION

(11) **EP 3 626 963 A1**
(43) Date of publication of application: **25.03.2020**
(21) Application number: 18207304.9
(22) Date of filing: 20.11.2018
(51) Int. Cl.: F02N 11/08, B60W 30/18

(54) **METHOD AND SYSTEM FOR CONTROLLING ENGINE RESTART OF MANUAL TRANSMISSION VEHICLE WITH IDLE STOP AND GO SYSTEM**

(30) Priority: 18.09.2018 KR 20180111617
(71) Applicant: Hyundai Motor Company, Seoul (KR); Kia Motors Corporation, Seoul (KR)
(72) Inventor: LEE, Tae Suk, 18280 Hwaseong-si, Gyeonggi-do (KR); WOO, Minsoo, 18280 Hwaseong-si, Gyeonggi-do (KR); JUNG, Young Ho, 18280 Hwaseong-si, Gyeonggi-do (KR); BANG, Jung Hwan, 18280 Hwaseong-si, Gyeonggi-do (KR); PARK, Seong Kyu, 18280 Hwaseong-si, Gyeonggi-do (KR); JUNG, Min Young, 18280 Hwaseong-si, Gyeonggi-do (KR)
(74) Representative: Viering, Jentschura & Partner mbB Patent- und Rechtsanwälte

(57) **Abstract**

Provided are a method and a system for controlling engine restart of a manual transmission vehicle with an ISG system, which improve fuel efficiency by delaying an engine restarting time of the manual transmission vehicle to a time near start of a vehicle.

A method for controlling engine restart of a manual transmission vehicle with an idle stop and go (ISG) system may include: by a vehicle which enters an idle stop state, determining whether a gradient satisfies a set range; when it is determined that the gradient satisfies the set range, determining whether upper and lower signals of a clutch pedal are switched to an on state; when it is determined that the upper and lower signals of the clutch pedal are switched to the on state, determining whether a signal of the brake pedal is switched to an off state; and when the signal of the brake pedal is switched to the off state, releasing the idle stop state.

## Description

### CROSS-REFERENCE TO RELATED APPLICATION

This application claims priority to and the benefit of Korean Patent Application No. 10-2018-0111617 filed in the Korean Intellectual Property Office on September 18, 2018, the entire contents of which are incorporated herein by reference.

### BACKGROUND OF THE INVENTION

### (a) Field of the Invention

The present invention relates to a method and a system for controlling engine restart of a manual transmission vehicle with an idle stop and go (ISG) system, and more particularly, to a method and an apparatus for controlling engine restart of a manual transmission vehicle with an ISG system, which improve fuel efficiency by increasing an engine off time by delaying a restart time of an engine to a time near to start of a vehicle in a vehicle which enters an idle stop state.

### (b) Description of the Related Art

Recently, technical development for enhancing fuel efficiency of a vehicle and reducing exhaust gas has been actively conducted due to energy depletion and environmental pollution problems. An idle stop and go (ISG) system is one of techniques developed to enhance the fuel efficiency and reduce the exhaust gas.

The ISG system refers to a system that automatically pauses an idling engine when the vehicle is temporarily stopped due to a signal waiting during running of the vehicle and restarts the engine when intending to start the vehicle after a predetermined time elapses. Such an ISG system may achieve a fuel efficiency enhancement effect of approximately 5 to 15% in an actual fuel efficiency mode.

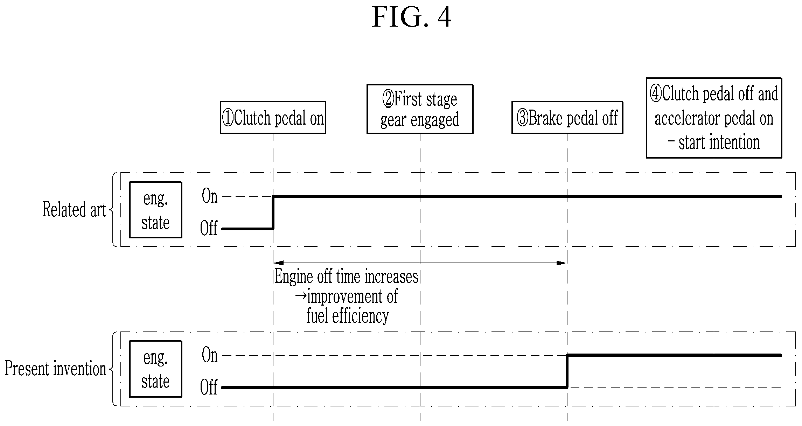

A process in which the manual transmission vehicle having the ISG system is restarted and started is described with reference to FIG. 4. It is predicted that a state in which a clutch pedal is turned on in idle stop, a state in which a first-step gear is engaged, a state in which a brake pedal is turned off, a state in which the clutch pedal is turned off, and a state in which an accelerator pedal is turned on sequentially occur. In this case, the engine is restarted when the clutch pedal is switched from an off state to an on state. That is, there is a time until the vehicle is actually started after the engine is restarted.

The above information disclosed in this Background section is only for enhancement of understanding of the background of the invention and therefore it may contain information that does not form the prior art that is already known in this country to a person of ordinary skill in the art.

### SUMMARY OF THE INVENTION

Therefore, the present invention has been made in an effort to provide a method and a system for controlling engine restart of a manual transmission vehicle with an ISG system, which increase an off time of an engine by delaying a restart time of the engine in consideration of a clutch pedal, a brake pedal, gear lever operating situations of a driver, a speed of a vehicle, and a gradient to improve fuel efficiency.

An exemplary embodiment of the present invention provides a method for controlling engine restart of a manual transmission vehicle with an idle stop and go (ISG) system, which may include: by a vehicle which enters an idle stop state, determining whether a gradient satisfies a set range; when it is determined that the gradient satisfies the set range, determining whether upper and lower signals of a clutch pedal are switched to an on state; when it is determined that the upper and lower signals of the clutch pedal are switched to the on state, determining whether a signal of the brake pedal is switched to an off state; and when the signal of the brake pedal is switched to the off state, releasing the idle stop state.

The signal of the brake pedal may be determined by a brake pedal sensor value or determined according to a brake cylinder pressure sensor value.

The method may further include: when it is determined that the lower signal of the clutch pedal is not switched to the on state, determining whether the upper signal of the clutch pedal is switched to the on state twice within a reference time; and releasing the idle stop state when the upper signal of the clutch pedal is switched to the on state twice within the reference time.

The method may further include: when it is determined that the gradient does not satisfy the set range, determining whether there is a restarting request; and releasing the idle stop state when it is determined that there is the restarting request, in which in the determining of whether there is the restarting request, it may be determined whether a gear stage is an N-th stage, when it is determined that the gear stage is the N-th stage, it may be determined that there is the restarting request when the upper signal of the clutch pedal is switched to the on state, and when it is determined that the gear stage is not the N-th stage, it may be determined that there is the restarting request when the upper and lower signals of the clutch pedal are switched to the on state.

Another exemplary embodiment of the present invention provides a method controlling engine restart of a manual transmission vehicle with an idle stop and go (ISG) system, which includes: by a vehicle which is in an engine stall state, determining whether an engine is restartable; determining whether there is a restarting request of the engine when it is determined that the engine is restartable; and restarting the engine when there is the restarting request of the engine, in which in the determining of whether the engine is restartable, when an RPM value of the engine is within a set value and upper and lower signals of a clutch pedal are in an off state, it may be determined that the engine is restartable, and wherein in the determining of whether there is the restarting request of the engine, it may be determined whether a gear stage is an N-th stage, when it is determined that the gear stage is the N-th stage, it may be determined that there is the restarting request of the engine when the upper signal of the clutch pedal is switched to the on state, and when it is determined that the gear stage is not the N-th stage, it may be determined that there is the restarting request of the engine when the upper and lower signals of the clutch pedal are switched to the on state.

Yet another exemplary embodiment of the present invention provides an apparatus for controlling engine restart of a manual transmission vehicle with an idle stop and go (ISG) system, which may include: an engine generating power; a speed sensor detecting a speed of a vehicle; an acceleration sensor detecting an acceleration of the vehicle; clutch pedal upper and lower sensors detecting operations of upper and lower portions of a clutch; a brake pedal sensor detecting the operation of a brake; a brake cylinder pressure sensor detecting pressure within a brake cylinder; an accelerator pedal sensor detecting the operation of an accelerator; a gear stage sensor detecting a gear position of a vehicle; a slope sensor detecting a gradient; an engine RPM sensor outputting a corresponding signal by sensing rotation of an engine; and a controller determining whether the engine enters an idle stop state based on detection values of the speed sensor, the acceleration sensor, the slope sensor, the clutch pedal upper and lower sensors, the brake pedal sensor, the accelerator pedal sensor, the gear stage sensor, the slope sensor, the engine RPM sensor, determining whether the slope sensor value satisfies a set range and when the slope sensor value satisfies the set range, determining whether signals of the clutch pedal upper and lower sensors are switched to an on state, and restarting the engine when the signal of the brake pedal sensor is switched to an off state.

The controller may determine that the signal of the brake pedal is in an off state when the brake cylinder pressure sensor value is equal to or smaller than a set value.

When it is determined that the signal of the clutch pedal lower sensor is not switched to the on state, the controller may release the idle stop state when the signal of the clutch pedal upper sensor is switched to the on state twice within a reference time.

When it is determined that the slope sensor value does not satisfy the set range, the controller may determine whether a gear stage is an N-th stage, when it is determined that the gear stage is the N-th stage, release the ISG state when the signal of the upper sensor of the clutch pedal is switched to the on state, and when the gear stage is not the N-th stage, release the idle stop state when the signals of the upper and lower sensors of the clutch pedal are switched to the on state.

When it is determined that the engine is in a stop state by a stall, the controller may determine whether the engine is restartable and determine whether there is a restarting request of the engine and may be capable of restarting the engine when there is the restarting request of the engine.

When an RPM value of the engine is equal to or less than a set value and the signals of the upper and lower sensors of the clutch pedal are in an off state, the controller may determine that the engine is restartable.

The controller may determine whether the gear stage is the N-th stage, when it is determined that the gear stage is the N-th stage, the controller may determine that there is the restarting request of the engine when the signal of the upper sensor of the clutch pedal is switched to the on state, and when it is determined that the gear stage is not the N-th stage, the controller may determine that there is the restarting request of the engine when the signals of the upper and lower sensors of the clutch pedal are switched to the on state.

According to exemplary embodiments of the present invention, fuel efficiency can be improved by increasing an engine off time by delaying a restart time of an engine to a time near to start of a vehicle in an idle stop state.

### BRIEF DESCRIPTION OF THE DRAWINGS

FIG. 1 is a block diagram of a system for controlling engine restart of a manual transmission vehicle with an ISG system according to an exemplary embodiment of the present invention.
FIG. 2 is a flowchart of a method for controlling engine restart when a manual transmission vehicle with an ISG system is in an engine stall state according to an exemplary embodiment of the present invention.
FIG. 3 is a flowchart of a method for controlling restart when a manual transmission vehicle with an ISG system enters an idle stop state according to an exemplary embodiment of the present invention.
FIG. 4 is a graph for an engine restart time of a manual transmission vehicle with an ISG system according to an exemplary embodiment of the present invention.

### DETAILED DESCRIPTION OF THE EMBODIMENTS

An exemplary embodiment of the present invention will hereinafter be described in detail with reference to the accompanying drawings.

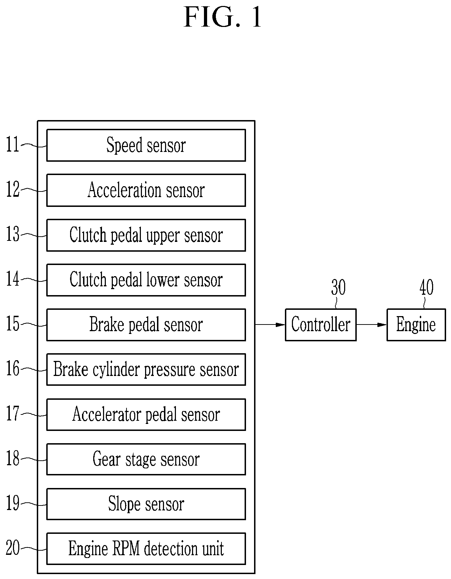

FIG. 1 is a block diagram of a system for controlling engine restart of a manual transmission vehicle with an ISG system according to an exemplary embodiment of the present invention.

As illustrated in FIG. 1, a system for controlling engine restart of a manual transmission vehicle with an ISG system according to an exemplary embodiment includes a speed sensor 11, an acceleration sensor 12, a clutch pedal upper sensor 13, a clutch pedal lower sensor 14, a brake pedal sensor 15, a brake cylinder pressure sensor 16, an accelerator pedal sensor 17, a gear stage sensor 18, a slope sensor 19, an engine RPM sensor 20, a controller 30, and an engine 40.

The speed sensor 11 detects a speed of a vehicle and transmits a signal for the detected speed to the controller 30.

The acceleration sensor 12 detects an acceleration of the vehicle and transmits a signal for the detected acceleration to the controller 30. The acceleration sensor 12 may be mounted separately from the speed sensor 11 or the acceleration of the vehicle may be calculated based on the speed of the vehicle detected by the speed sensor 11.

The clutch pedal upper sensor 13 and the clutch pedal lower sensor 14 detect an operation of a clutch and transmit a signal for the detected operation to the controller 30. When only an upper portion of the clutch is in an on state, the clutch pedal upper sensor 13 outputs a TRUE signal and the clutch pedal lower sensor 14 outputs a FALSE signal. When the upper portion and a lower portion of the clutch are in the on state, both the clutch pedal upper sensor 13 and the clutch pedal lower sensor 14 output the TRUE signal. That is, a step amount of the clutch pedal may be determined by using the clutch pedal upper sensor 13 and the clutch pedal lower sensor 14.

The brake pedal sensor 15 detects the operation of the brake and transmits a signal for the detected operation to the controller 30. When the brake operates, the brake pedal sensor 15 outputs the TRUE signal and when the brake does not operate, the brake pedal sensor 15 outputs the FALSE signal.

The brake cylinder pressure sensor 16 detects pressure in a brake cylinder and transmits a signal for the detected pressure to the controller 30. When a brake cylinder pressure sensor value is equal to or smaller than a set value, it may be determined that the brake pedal is in an off state. Therefore, when the brake cylinder pressure sensor value is equal to or smaller than the set value even though a sensor value of the brake pedal is on, it may be determined that the brake pedal is in the off state.

The accelerator pedal sensor 17 detects the operation of an acceleration pedal and transfers a signal for the detected operation to the controller 30. When the acceleration pedal operates, the acceleration pedal sensor 17 outputs the TRUE signal and when the acceleration pedal does not operate, the acceleration pedal sensor 17 outputs the FALSE signal.

The gear stage sensor 18 detects a currently engaged gear stage and transmits a signal for the detected gear stage to the controller 30.

The slope sensor 19 measures gradients of an uphill road, a downhill road, a flat road, and the like for a road on which the vehicle is driven and transfers signals for the measured gradients to the controller 30.

The RPM detection unit 20 of the engine detects an RPM of the engine and transmits a signal for the detected RPM to the controller 30.

The controller 30 restarts an engine 40 by receiving the signals from the speed sensor 11, the acceleration sensor 12, the clutch pedal upper sensor 13, the clutch pedal lower sensor 14, the brake pedal sensor 15, the brake cylinder pressure sensor 16, the accelerator pedal sensor 17, the gear stage sensor 18, the slope sensor 19, and the engine RPM detection unit 20.

For such a purpose, the controller 30 may be implemented by one or more processors which operate by a set program and the set program may be programmed to perform each step of the method for controlling the manual transmission vehicle with an ISG system according to the exemplary embodiment of the present invention.

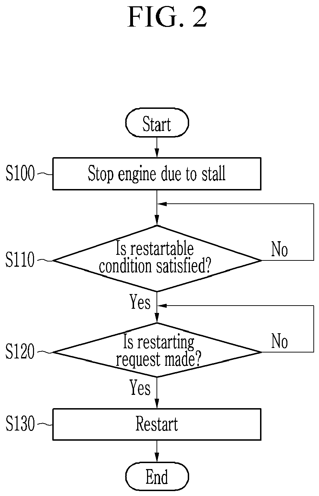

FIG. 2 is a flowchart of a method for controlling restart when a manual transmission vehicle with an ISG system is in an engine stall state according to an exemplary embodiment of the present invention.

When the manual transmission vehicle with the ISG system in an engine is in an engine stall state, a flowchart of FIG. 2 starts (S100).

The engine stall state means a state in which the engine operates and the engine abruptly abnormally stops. For example, when the engine is in a stop state, but the gear stage is not in an N stage or the signal of the clutch pedal is not in the off state, it may be determined that the vehicle is in the engine stall state.

When the vehicle is in the engine stall state, the controller 30 determines whether an engine restartable condition of the engine 40 is satisfied (S110). When the RPM value of the engine 40 is within a set value and upper and lower signals of the clutch pedal are in the off state, the controller 30 determines that the restartable condition is satisfied. That is, when the clutch pedal is completely released after the engine stops, it is determined that the engine 40 is restartable. For example, when the RPM value has a value within 50 for one second, it may be determined that the engine is in the stop state.

When it is determined in step S110 that the restartable condition of the engine 40 is satisfied, the controller 30 determines whether there is a restart request (S120). After the engine stall occurs, the driver's request for restarting needs to be reflected as soon as possible, so that the restarting request is determined by a simple and intuitive clutch pedal stepping act.

Therefore, when it is determined the gear stage is the N-th stage and the gear stage is determined as the N-th stage, in a case where the upper signal of the clutch pedal is switched to the on state, it is determined that there is the restarting request of the engine 40 and when it is determined that the gear stage is not the N-th stage, when the upper and lower signals of the clutch pedal are switched to the on state, it is determined that there is the restarting request of the engine 40.

When it is determined that there is the restarting request in step S120, the controller 30 restarts the engine 40 (S130). When even any one of the restartable condition and the restarting request is not satisfied, the controller 30 continuously checks whether each condition is satisfied without restarting the engine 40.

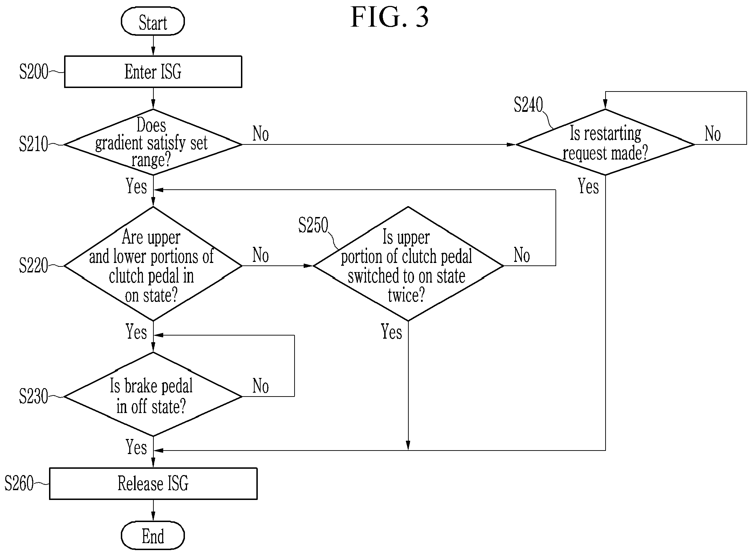

FIG. 3 is a flowchart of a method for controlling restart when a manual transmission vehicle with an ISG system enters an idle stop state according to an exemplary embodiment of the present invention.

When the manual transmission vehicle with the ISG system enters the idle stop state, the flowchart of FIG. 3 starts (S200). For example, when the gear stage is the N-th stage and the clutch pedal is in the off state, it may be determined that the vehicle enters the idle stop state.

When the vehicle enters the idle stop stage, the controller 30 determines whether the gradient satisfies a set range (S210). The gradient may be determined as a slope sensor value.

In order to determine whether a road surface is the flat road, the set range may be set to 0.45 or less and - 0.25 or more. The reason is that when the brake pedal is switched to the off state on an uphill ramp, in a case where the idle stop state is released, psychological anxiety of the driver may be caused. Therefore, when the slope sensor value satisfies the set range, it is determined that the road surface is the flat road, and as a result, the restarting time of the vehicle may be delayed.

Meanwhile, when there is a problem in a hill assist control (HAC) function, the slope sensor outputs the FALSE signal, and as a result, the slope condition is not satisfied. The reason is that when there is the problem in the HAC function, the vehicle may be pushed back or the start may be turned off.

Further, when a momentary impact is received, that is, when the driver picks a thing which is fallen on a floor while the vehicle stops or the driver moves in order to care a child on a rear seat, in a case where a simple touch accident, etc. occur, there is a high possibility that an output value will fluctuate, and as a result, the restart condition may be abruptly changed. Therefore, in order to prevent malfunction by fluctuation of an output value of the slope sensor 19, a stabilization time of the slope sensor 19 may be set. This may be set as an experience value according to coil characteristics of the slope sensor 19 for each vehicle.

When it is determined that the gradient satisfies the set range, it is determined whether the upper and lower signals of the clutch pedal are switched to the on state (S220).

When it is determined that the upper and lower signals of the clutch pedal are switched to the on state, it is determined whether the signal of the brake pedal is switched to the off state (S230). Even though the signal of the brake pedal is in the on state, when the pressure sensor value in the brake cylinder is equal to or smaller than the set value, it may be determined that the signal of the brake pedal is in the off state.

When it is determined that the signal of the brake pedal is switched to the off state in step S230, the idle stop state is released when the signal of the brake pedal is switched to the off state (S260). That is, the engine 40 is restarted.

When it is determined that the upper and lower signals of the clutch pedal are not in the on state in step S220, it is determined whether the upper signal of the clutch pedal is switched to the on state again within a set time after the upper signal of the clutch pedal is switched to the on state (S250).

When the upper signal of the clutch pedal is not switched to the on state within the set time after the upper signal of the clutch pedal is switched to the on state, counting of the upper signal of the clutch pedal is reset. That is, the upper signal of the clutch pedal needs to be switched to the on state again within the set time after the upper signal of the clutch pedal is switched to the on state again. Further, when the signal of the brake pedal is switched to the off state, the gear stage is changed to another gear stage other than the N-th stage, or the slope condition is not satisfied, within the set time, counting of the upper signal of the clutch pedal is reset even in a case where it is impossible to release the idle stop state by other systems. The case where it is impossible to release the idle stop state by the other systems may be releasing a safety belt, opening a door of the vehicle, or the like.

When it is determined that the upper signal of the clutch pedal is switched to the on state again within the set time after the upper signal of the clutch pedal is switched to the on state, the idle stop state is released at that time (S260).

When it is determined that the gradient does not satisfy the set range in step S210, the controller 30 determines whether there is the restart request (S240). In determining whether there is the restarting request, when it is determined that the gear stage is the N-th stage and the gear stage is determined as the N-th stage, in a case where the upper signal of the clutch pedal is switched to the on state, it is determined that there is the restarting request and when it is determined that the gear stage is not the N-th stage, it is determined that there is the restarting request when the upper and lower signals of the clutch pedal are switched to the on state.

That is, when it is determined that the gradient does not satisfy the set range, the road surface is not the flat surface, and as a result, it is determined that there is the restarting request when the clutch pedal is stepped in order to eliminate anxiety of the driver and protect the system.

In the restarting request in step S240, the step amount of the clutch pedal is distinguished depending on whether the gear stage is the N-th stage. When the gear stage is the N-th stage, a drive line is not directly connected, and as a result, it may be determined that there is the restarting request at the time when only the upper signal of the clutch pedal is switched to the on state. On the contrary, when the gear is not in the N-th stage, the drive line may be directly connected, and as a result, an overload may be applied to a starter motor and the vehicle may be unintentionally moved. Therefore, the idle stop state may be released at the time when both the upper and lower signals of the clutch pedals are switched to the on state and power is thus interrupted.

When it is determined that there is the restarting request in step S240, the idle stop state is released at that time (S260).

FIG. 4 is a graph for an engine restart time of a manual transmission vehicle with an ISG system according to an exemplary embodiment of the present invention.

Generally, the restarting step of the manual transmission vehicle may be regarded as a start ready state in which the clutch pedal is turned on, the brake pedal is turned off, and the gear stage engages in a first stage and a start state in which the clutch pedal is turned off and the accelerator pedal is turned on in a stop state in which the clutch pedal is turned off, the brake pedal is turned on, and the gear stage is the N-th stage. In this case, the engine 40 is restarted at a moment when the clutch pedal is turned on. However, according to the exemplary embodiment of the present invention, at a time near the start of the vehicle, that is, a moment when the brake pedal is turned off, the engine 40 is restarted to increase an off time of the engine 40, thereby improving the fuel efficiency.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

### <Description of symbols>

- 11:: Speed sensor
- 12:: Acceleration sensor
- 13:: Clutch pedal upper sensor
- 14:: Clutch pedal lower sensor
- 15:: Brake pedal sensor
- 16:: Brake cylinder pressure sensor
- 17:: Accelerator pedal sensor
- 18:: Gear stage sensor
- 19:: Slope sensor
- 20:: Engine RPM detection unit
- 30:: Controller
- 40:: Engine

## Claims

1. A method for controlling engine restart of a manual transmission vehicle with an idle stop and go (ISG) system, the method comprising:
by a vehicle which enters an idle stop state,
determining whether a gradient satisfies a set range;
when it is determined that the gradient satisfies the set range, determining whether upper and lower signals of a clutch pedal are switched to an on state;
when it is determined that the upper and lower signals of the clutch pedal are switched to the on state, determining whether a signal of the brake pedal is switched to an off state; and
when the signal of the brake pedal is switched to the off state, releasing the idle stop state.

2. The method of claim 1, wherein:
the signal of the brake pedal is determined by a brake pedal sensor value or determined according to a brake cylinder pressure sensor value.

3. The method of claim 1 or 2, further comprising:
when it is determined that the lower signal of the clutch pedal is not switched to the on state,
determining whether the upper signal of the clutch pedal is switched to the on state twice within a reference time; and
releasing the idle stop state when the upper signal of the clutch pedal is switched to the on state twice within the reference time.

4. The method of any one of claims 1 to 3, further comprising:
when it is determined that the gradient does not satisfy the set range,
determining whether there is a restarting request; and
releasing the idle stop state when it is determined that there is the restarting request,
wherein in the determining of whether there is the restarting request,
it is determined whether a gear stage is an N-th stage,
when it is determined that the gear stage is the N-th stage, it is determined that there is the restarting request when the upper signal of the clutch pedal is switched to the on state, and
when it is determined that the gear stage is not the N-th stage, it is determined that there is the restarting request when the upper and lower signals of the clutch pedal are switched to the on state.

5. A method for controlling engine restart of a manual transmission vehicle with an idle stop and go (ISG) system, the method comprising:
by a vehicle which is in an engine stall state,
determining whether a restartable condition is satisfied;
determining whether there is a restarting request when it is determined that the restartable condition is satisfied; and
restarting an engine when it is determined that there is the restarting request,
wherein in the determining of whether the engine is restartable,
when an RPM value of the engine is within a set value and upper and lower signals of a clutch pedal are in an off state, it is determined that the engine is restartable, and
wherein in the determining of whether there is the restarting request of the engine,
it is determined whether a gear stage is an N-th stage,
when it is determined that the gear stage is the N-th stage, it is determined that there is the restarting request of the engine when the upper signal of the clutch pedal is switched to the on state, and
when it is determined that the gear stage is not the N-th stage, it is determined that there is the restarting request of the engine when the upper and lower signals of the clutch pedal are switched to the on state.

6. An apparatus for controlling engine restart of a manual transmission vehicle with an idle stop and go (ISG) system, the apparatus comprising:
an engine generating power;
a speed sensor detecting a speed of a vehicle;
an acceleration sensor detecting an acceleration of the vehicle;
clutch pedal upper and lower sensors detecting operations of upper and lower portions of a clutch;
a brake pedal sensor detecting the operation of a brake;
a brake cylinder pressure sensor detecting pressure within a brake cylinder;
an accelerator pedal sensor detecting the operation of an accelerator;
a gear stage sensor detecting a gear position of a vehicle;
a slope sensor detecting a gradient;
an engine RPM sensor outputting a corresponding signal by sensing rotation of an engine; and
a controller determining whether the engine enters an idle stop state based on detection values of the speed sensor, the acceleration sensor, the slope sensor, the clutch pedal upper and lower sensors, the brake pedal sensor, the accelerator pedal sensor, the gear stage sensor, the slope sensor, the engine RPM sensor, determining whether the slope sensor value satisfies a set range and when the slope sensor value satisfies the set range, determining whether signals of the clutch pedal upper and lower sensors are switched to an on state, and releasing the idle stop state of the engine when the signal of the brake pedal sensor is switched to an off state.

7. The apparatus of claim 6, wherein:
the controller determines that the signal of the brake pedal is in an off state when the brake cylinder pressure sensor value is equal to or smaller than a set value.

8. The apparatus of claim 6 or 7, wherein:
when it is determined that the signal of the clutch pedal lower sensor is not switched to the on state, the controller releases the idle stop state when the signal of the clutch pedal upper sensor is switched to the on state twice within a reference time.

9. The apparatus of any one of claim 6 to 8, wherein:
when it is determined that the slope sensor value does not satisfy the set range, the controller,
determines whether a gear stage is an N-th stage,
when it is determined that the gear stage is the N-th stage, releases the idle stop state when the signal of the upper sensor of the clutch pedal is switched to the on state, and
when it is determined that the gear stage is not the N-th stage, releases the idle stop state when the signals of the upper and lower sensors of the clutch pedal are switched to the on state.

10. The apparatus of any one of claims 6 to 9, wherein:
when it is determined that the engine is in a stall state, the controller determines whether the engine is restartable and determines whether there is a restarting request of the engine and is capable of restarting the engine and restarts the engine when there is the restarting request.

11. The apparatus of any one of claims 6 to 10, wherein:
when an RPM value of the engine is equal to or less than a set value and the signals of the upper and lower sensors of the clutch pedal are in an off state, the controller determines that the engine is restartable.

12. The apparatus of claim 9 to 11, wherein:
the controller determines whether the gear stage is the N-th stage,
when it is determined that the gear stage is the N-th stage, the controller determines that there is the restarting request of the engine when the signal of the upper sensor of the clutch pedal is switched to the on state, and
when it is determined that the gear stage is not the N-th stage, the controller determines that there is the restarting request of the engine when the signals of the upper and lower sensors of the clutch pedal are switched to the on state.

## Amended claims

### Amended claims in accordance with Rule 137(2) EPC.

1. A method for controlling engine restart of a manual transmission vehicle with an idle stop and go (ISG) system, the method comprising:
by a vehicle which enters an idle stop state,
determining whether a gradient satisfies a set range;
when it is determined that the gradient satisfies the set range, determining whether upper and lower signals of a clutch pedal are switched to an on state;
when it is determined that the upper and lower signals of the clutch pedal are switched to the on state, determining whether a signal of the brake pedal is switched to an off state; and
when the signal of the brake pedal is switched to the off state, releasing the idle stop state,
**characterized in that**
the method further comprises:
when it is determined that the lower signal of the clutch pedal is not switched to the on state,
determining whether the upper signal of the clutch pedal is switched to the on state twice within a reference time; and
releasing the idle stop state when the upper signal of the clutch pedal is switched to the on state twice within the reference time.

2. The method of claim 1, wherein:
the signal of the brake pedal is determined by a brake pedal sensor value or determined according to a brake cylinder pressure sensor value.

3. The method of any one of claims 1 or 2, further comprising:
when it is determined that the gradient does not satisfy the set range,
determining whether there is a restarting request; and
releasing the idle stop state when it is determined that there is the restarting request,
wherein in the determining of whether there is the restarting request,
it is determined whether a gear stage is an N-th stage,
when it is determined that the gear stage is the N-th stage, it is determined that there is the restarting request when the upper signal of the clutch pedal is switched to the on state, and
when it is determined that the gear stage is not the N-th stage, it is determined that there is the restarting request when the upper and lower signals of the clutch pedal are switched to the on state.

4. An apparatus for controlling engine restart of a manual transmission vehicle with an idle stop and go (ISG) system, the apparatus comprising:
an engine generating power;
a speed sensor detecting a speed of a vehicle;
an acceleration sensor detecting an acceleration of the vehicle;
clutch pedal upper and lower sensors detecting operations of upper and lower portions of a clutch;
a brake pedal sensor detecting the operation of a brake;
a brake cylinder pressure sensor detecting pressure within a brake cylinder;
an accelerator pedal sensor detecting the operation of an accelerator;
a gear stage sensor detecting a gear position of a vehicle;
a slope sensor detecting a gradient;
an engine RPM sensor outputting a corresponding signal by sensing rotation of an engine; and
a controller determining whether the engine enters an idle stop state based on detection values of the speed sensor, the acceleration sensor, the slope sensor, the clutch pedal upper and lower sensors, the brake pedal sensor, the accelerator pedal sensor, the gear stage sensor, the slope sensor, the engine RPM sensor, determining whether the slope sensor value satisfies a set range and when the slope sensor value satisfies the set range, determining whether signals of the clutch pedal upper and lower sensors are switched to an on state, and, when it is determined that the upper and lower signals of the clutch pedal are switched to the on state, determining whether a signal of the brake pedal is switched to an off state and releasing the idle stop state of the engine when the signal of the brake pedal sensor is switched to an off state,
**characterized in that**
the controller determining that the signal of the clutch pedal lower sensor is not switched to the on state, the controller releases the idle stop state when the signal of the clutch pedal upper sensor is switched to the on state twice within a reference time.

5. The apparatus of claim 4, wherein:
the controller determines that the signal of the brake pedal is in an off state when the brake cylinder pressure sensor value is equal to or smaller than a set value.

6. The apparatus of any one of claims 4 or 5, wherein:
when it is determined that the slope sensor value does not satisfy the set range, the controller,
determines whether a gear stage is an N-th stage,
when it is determined that the gear stage is the N-th stage, releases the idle stop state when the signal of the upper sensor of the clutch pedal is switched to the on state, and
when it is determined that the gear stage is not the N-th stage, releases the idle stop state when the signals of the upper and lower sensors of the clutch pedal are switched to the on state.
